Europäisches Patentamt

European Patent Office

Office européen des brevets

(19)

(11) Numéro de publication : **0 099 309**
**B1**

(12) **FASCICULE DE BREVET EUROPÉEN**

(45) Date de publication du fascicule du brevet :
07.05.86

(51) Int. Cl.4 : **G 01 N 21/47, G 01 N 33/53**

(21) Numéro de dépôt : **83420111.3**

(22) Date de dépôt : **30.06.83**

(54) Néphélomètre à laser perfectionné pour la détection des antigènes et des anticorps.

(30) Priorité : 06.07.82 FR 8212045

(43) Date de publication de la demande :
25.01.84 Bulletin 84/04

(45) Mention de la délivrance du brevet :
07.05.86 Bulletin 86/19

(84) Etats contractants désignés :
DE GB

(56) Documents cités :
EP-A- 0 005 979
FR-A- 2 389 134
US-A- 2 970 216
MEDICAL PROGRESS THROUGH TECHNOLOGY, vol. 6, no. 2, 1979, pages 81-90, Springer-Verlag, Heidelberg, DE., E. ACKERMAN et al.: "Immunonephelometric assays"
JOURNAL OF CLINICAL CHEMISTRY AND CLINICAL BIOCHEMISTRY, vol. 16, no. 7, 1978, pages 397-402, Walter de Gruyter, Berlin, DE., B. BARUTH et al.: "Quantitative Bestimmung von Serum-Proteinen mit einem neuen Laser-nephelometer"
BEHRING INSTITUT - BEHRING LASER-NEPHELOMETER, décembre 1979, pages 1-7
JOURNAL OF PHYSICS E, vol. 9, 1976, pages 268-270, D.H. McQUEEN: "Light scattering instrument for measuring molecular weights in 100 mug samples"
Le dossier contient des informations techniques présentées postérieurement au dépôt de la demande et ne figurant pas dans le présent fascicule.

(73) Titulaire : **CENTRE NATIONAL DE LA RECHERCHE SCIENTIFIQUE (CNRS)**
**13 Quai Anatole France**
**F-75700 Paris (FR)**

**INSTITUT PASTEUR DE LYON ET DU SUD-EST**
**77, rue Pasteur**
**F-69007 Lyon (FR)**

(72) Inventeur : **Lenoir, Jeannine**
**28 rue Chanvillard**
**F-69630 Chaponost (FR)**
Inventeur : **Bertoye, André**
**37 rue Servient**
**F-69003 Lyon (FR)**
Inventeur : **Bertoye, Renée**
**9 rue de Bonnel**
**F-69003 Lyon (FR)**

(74) Mandataire : **Laurent, Michel et al**
**20 rue Louis Chirpaz Boite Postale 32**
**F-69130 Lyon-Ecully (FR)**

## Description

L'invention concerne un néphélomètre à laser pour la détection de la présence d'antigènes ou d'anticorps et éventuellement le dosage de ceux-ci.

Comme on le sait, un antigène est une substance capable de provoquer la formation d'anticorps et de réagir spécifiquement avec celui-ci. Ce sont le plus souvent des protéines, des polyosides, des lipides ou des acides nucléiques. Il existe plusieurs sortes d'antigènes :

les antigènes cellulaires qui caractérisent et classent l'individu qui les porte ;

les antigènes parasitaires constitutifs du parasite ou sécrétés par celui-ci ;

les antigènes bactériens supportés par les membranes, le corps des bactéries ou sécrétés par elles ;

les antigènes des virus.

L'introduction d'un antigène dans un organisme étranger à celui-ci stimule la production d'anticorps : c'est la réaction immunitaire. Les anticorps appartiennent à la classe des globulines sériques et possèdent toutes les propriétés des protéines.

Les molécules d'antigènes et d'anticorps présentent plusieurs sites actifs. Lorsque les solutions de ces produits sont de concentration adaptée, leur mélange donne une floculation constituée d'un réseau dense de molécules d'antigènes et d'anticorps. Si l'un des produits est en excès, la réaction n'est pas apparente.

Le processus peut se compléter par l'addition sur le complexe d'une substance appelée complément. Ce complément est un ensemble de plusieurs protéines sériques autres que l'albumine, réagissant successivement dans un ordre bien déterminé. Le complément n'a pas de spécificité immunologique, mais il augmente le volume du complexe antigène-anticorps et le rend visible.

Ainsi, le mélange de solutions d'antigènes et d'anticorps correspondant, dans des proportions convenables, produit un complexe insoluble dans la plupart des cas et le milieu devient opalescent. Les tests immunologiques de précipitation et de floculation sont ainsi basés sur la quantification de cette opalescence.

Actuellement, pour détecter la présence d'antigènes ou d'anticorps, une des méthodes utilise la néphélométrie (méthode dénommée également turbidimétrie), c'est-à-dire que l'on observe l'apparition d'un précipité.

Dans une première méthode, on mélange les quantités diluées, puis on observe visuellement l'apparition du trouble (immunodiffusion, électrosynérèse, test de précipitation). Cette apparition ne s'effectue le plus souvent qu'au bout de vingt-quatre heures ou même plus, ce qui est trop long pour des dosages médicaux.

Pour diminuer ce délai et les quantités en présence, on a suggéré d'opérer sur un gel. Si on raccourcit effectivement le délai de près de la moitié, ce temps est encore jugé beaucoup trop long.

On a proposé d'observer ces précipitations avec un néphélomètre à laser, c'est-à-dire un appareil à laser grâce auquel on observe la turbidité d'un liquide, c'est-à-dire sa teneur en particules d'un indice de réfraction différent. Cette technique repose essentiellement sur la diffusion de la lumière par les complexes antigènes-anticorps insolubles formés en milieu liquide. L'intensité du faisceau de lumière diffusée est alors fonction de la concentration de ces complexes. Ces néphélomètres étant bien connus, il n'y a donc pas lieu de les décrire en détail. Sommairement, un néphélomètre à laser comprend essentiellement (voir par exemple Medicinal Progress Technology 6, 2 (1979) 81-90) :

une source lumineuse constituée par un rayon laser destiné à émettre une lumière cohérente, monochromatique, parallèle et étroite ;

une cellule de mesure où se trouve l'échantillon à tester, éventuellement placé dans un système d'avancement par rapport au rayon laser ;

un détecteur photoélectrique recueillant la lumière diffusée sous un angle optimum, par exemple de 31,8 degrés, associé s'il y a lieu à un appareil photo-multiplicateur ;

un organe fournissant les résultats, soit par mise en mémoire, soit par affichage direct sur un écran, soit sur une imprimante ou sur une table traçante.

Bien que cet appareil soit largement répandu, il présente encore de nombreux inconvénients liés essentiellement à la cellule de mesure constituée actuellement par une cuve dont le volume est de l'ordre d'environ un cm³. Un tel volume présente en milieu médical de graves inconvénients car généralement, la quantité de liquide dont on dispose est au mieux de cet ordre de grandeur et en outre, par sécurité ou pour de multiples raisons, on doit effectuer plusieurs mesures, notamment pour se trouver dans des conditions optimales de précipitation du complexe formé. Par ailleurs, dans cette méthode, on observe le début et la fin de la réaction, c'est-à-dire l'apparition de la précipitation totale, ce qui nécessite encore quelques heures, même avec des agents accélérateurs de précipitation.

Par ailleurs, le document FR-A-2 389 134 décrit une méthode photométrique mettant en œuvre un tube capillaire dont l'axe est situé sur le trajet optique du faisceau lumineux. L'usage d'un tel tube n'est pas divulgué dans le cas d'un néphélomètre.

L'invention pallie ces inconvénients. Elle concerne un néphélomètre à laser pour la détection, voire le dosage d'antigènes ou d'anticorps qui :

d'une part, ne nécessite qu'une faible quantité de liquide et soit, de ce fait, compatible avec les exigences médicales,

et d'autre part, permette de détecter beaucoup plus rapidement l'apparition du trouble caractéristique.

Ce néphélomètre perfectionné à laser se caractérise en ce que la cellule de mesure est constituée par un tube capillaire dont le diamètre interne est voisin du diamètre du rayon laser.

Comme on le sait, un tube capillaire est un tube en un matériau mouillable, dans lequel, sans aspiration, monte un liquide (loi de Jurin).

Ainsi, grâce à l'utilisation de ce tube capillaire, d'une part, on peut travailler avec des quantités très faibles de liquides et d'autre part et surtout, on peut observer le développement même de la réaction et non seulement le début et la fin de celle-ci comme c'était le cas jusqu'alors avec la cuve et enfin, il n'est pas utile d'ajouter des accélérateurs de précipitation.

Le plus généralement, on opère de la manière suivante. On introduit successivement par aspiration dans le tube capillaire des quantités de solutions d'antigènes et d'anticorps correspondants, de telle manière que la surface de séparation de ces deux solutions se trouve, lors de la mise en place du tube dans le néphélomètre, au voisinage du faisceau laser. Une fois les réactifs en présence, l'extrémité du capillaire est bouchée, par exemple à la cire, puis on place le tube dans le porte-échantillon du néphélomètre et enfin, on enregistre en fonction du temps le pourcentage de lumière diffusée, lequel croît avec la concentration des particules en suspension.

Ainsi, contrairement à la méthode avec cuve, les deux liquides antigènes-anticorps diffusent en sens inverse, comme dans la méthode d'immunodiffusion double et une floculation commence au voisinage de la zone de séparation.

En outre, et là réside une des caractéristiques originales de l'invention, le capillaire grâce à l'effet de parois, facilite la précipitation et augmente la cinétique de réaction, ce que l'on ne pouvait pas obtenir avec une cuve et est donc inattendu.

En pratique :

comme déjà dit, le diamètre interne du tube capillaire doit être voisin du diamètre du rayon laser, afin notamment de récupérer la plus grande partie de la lumière disponible ;

le diamètre interne de ce tube capillaire est compris entre 0,3 et 1,2 millimètre, et est de préférence voisin de un millimètre ; si on augmente ce diamètre, on augmente le volume de liquide, ce qui est sans intérêt et si on diminue ce diamètre, on diminue la longueur du trajet optique, donc la précision de la mesure ;

les volumes de solutions utilisées sont de l'ordre de un à quinze microlitres ($\mu$l) ;

le tube capillaire est en verre et présente une section cylindrique régulière ou en matière plastique transparente mouillable (non hydrophobe).

La manière dont l'invention peut être réalisée et les avantages qui en découlent ressortiront mieux des exemples de réalisation qui suivent donnés à titre indicatif et non limitatif, à l'appui des figures annexées.

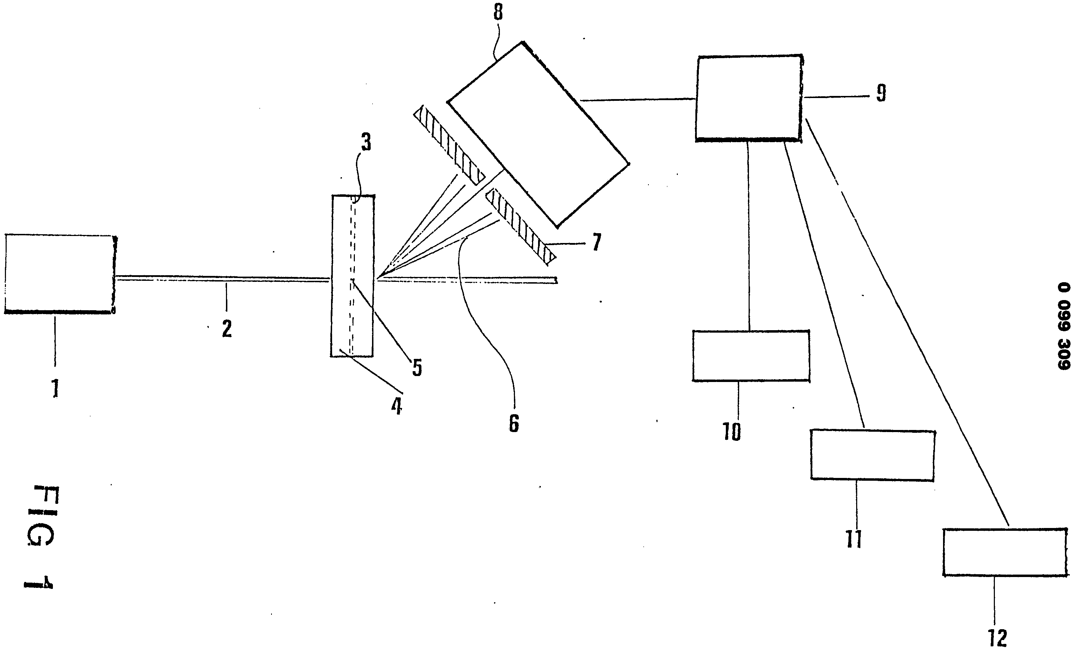

La figure 1 représente schématiquement un néphélomètre laser conforme à l'invention.

La figure 2 est une vue en perspective sommaire de la cellule porte-échantillons de ce néphélomètre.

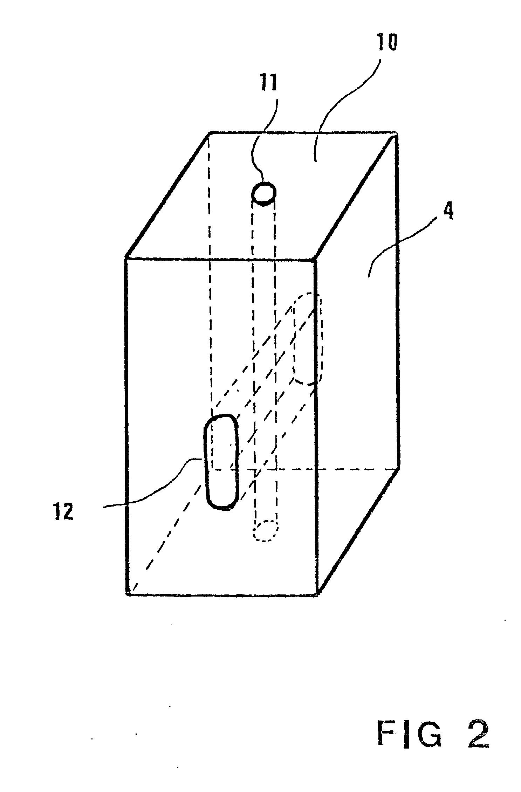

En se référant aux figures, un néphélomètre à laser est constitué essentiellement par une source laser (1) associée à son générateur, d'où est issu un faisceau laser incident (2), dont le diamètre est égal à celui du tube capillaire (3) placé dans le porte-échantillons (4) détaillé à la figure 2. Le rayon incident (2) débouche dans le tube capillaire (3) sensiblement au voisinage de la zone de séparation (5) des composés à étudier. La lumière diffusée (6) passe ensuite à travers un diaphragme (7), puis est reçu par un organe photodétecteur associé à un appareil photomultiplicateur (8). L'information reçue de cet organe (8) est transmise à une mémoire (9) qui la restitue, soit à un écran digital (10), soit à un appareil enregistreur (11), soit à une imprimante (12).

La cellule (4) porte-échantillons (3) se compose essentiellement (voir figure 2) d'un bloc métallique ou plastique noir (10) percé d'un orifice longitudinal (11), destiné à recevoir le tube capillaire (3), percé dans le sens transversal et orthogonal, d'une fenêtre (12) pour le passage des rayons lumineux. Pour obtenir une bonne reproductibilité des mesures, il importe que les pièces (3) et (4) soient parfaitement ajustées et positionnées.

Exemple 1

L'appareillage utilisé comporte essentiellement :

un générateur (1) source de rayon laser (2) (hélium-néon), connu, stabilisé (variation des courants inférieurs à 5 %), associé à son stabilisateur de courant ;

une chambre noire, la plus hermétique possible, dans laquelle se trouvera positionné le tube capillaire (3) dans son porte-échantillons (4) ;

un détecteur photoélectronique (8) tel qu'une cellule photoélectrique recueillant la lumière diffusée associée à son photomultiplicateur, cet ensemble étant connu ;

une mémoire (9) électronique connue ;

une table traçante ou imprimante (12) ou un écran de visualisation à affichage digital (10) destiné à lire les résultats.

Dans cet exemple, on cherche à détecter dans un liquide céphalorachidien d'adulte la présence d'un antigène de pneumocoque.

On met différents échantillons de ce prélèvement dans différents tubes capillaires de 0,8 mm de diamètre interne, dans lesquels on aspire dix microlitres de ce liquide céphalorachidien, puis cinq microlitres d'antisérum pneumococcique de groupes.

On bouche l'extrémité de ces tubes à la cire. On place ces tubes dans le porte-échantillons (4) du néphélomètre à laser et on met le porte-échantillons dans la chambre noire.

L'appareil est mis sous tension et le rayon laser (2) de un millimètre de diamètre, du fait même de la construction, tombe juste à l'interface (5) entre la solution d'antigènes et la solution d'anticorps.

Sur l'écran de visualisation (10) ou sur la table enregistreuse (12), on observe des variations. Cela prouve qu'à l'interface (5), on est bien dans la zone de précipitation.

On observe le déroulement de la courbe qui est :

plate lorsque la réaction est négative,

ascendante lorsque la réaction est positive et spécifique.

Ainsi, on en déduit le couplage spécifique antigène-anticorps, c'est-à-dire la présence d'un antigène spécifique.

La hauteur et la pente de la courbe donnent une évaluation de la quantité d'antigènes et par là, permet un premier dosage.

Exemple 2

Cet exemple concerne la recherche dans les sérums humains d'un anticorps antistaphylococcique avec du staphygène (antigène extrait par méthode métabolique du staphylocoque doré).

Après un temps de latence de deux à trois minutes, si le sérum contient l'anticorps correspondant, on constate que l'intensité de lumière diffusée monte en plusieurs étapes.

La première augmentation très rapide est suivie d'un palier de plusieurs minutes. Une deuxième montée plus lente, mais plus importante apparaît ensuite et le phénomène se ralentit en fonction du temps. Au bout de quinze minutes environ, on peut dire si la réaction a eu lieu ou non, alors qu'à ce moment, aucun précipité n'est encore visible à l'œil nu.

Après plusieurs heures, l'intensité de lumière diffusée diminue. Le volume des particules augmente et un trouble apparaît, puis on observe des floculats.

Lorsque le sérum est décomplémenté par chauffage à 56 °C, seule la première étape apparaît.

Ainsi, cette méthode est très intéressante en milieu hospitalier pour le dosage des antigènes dans le sérum humain. En effet, la détection des antigènes qui sont présents avant que les symptômes visibles de la maladie apparaissent, permet un diagnostic rapide, donc un traitement plus efficace. A titre indicatif, jusqu'à présent, cette détection nécessitait une grande quantité de sérum ou de liquide céphalorachidien et une durée de plusieurs heures, voire vingt-quatre.

La substitution de la cuve connue jusqu'alors par un tube capillaire, n'était nullement évidente. En effet :

d'une part, le tube capillaire était connu depuis fort longtemps et en tout cas bien avant la néphélométrie ;

d'autre part et surtout, dans une cuve, la réaction s'effectue dans tout le volume de la cuve, ce qui permet de ne retenir que le début et la fin de la réaction ; en revanche, dans un tube capillaire, comme la section est faible, on peut observer l'évolution de la réaction ;

comme déjà dit, l'effet de parois facilite la précipitation et augmente la cinétique de réaction, ce qui diminue le temps de mesure dans des proportions inattendues (vingt à trente minutes contre plusieurs heures) ;

enfin, le tube capillaire doit présenter des caractéristiques précises, à savoir un diamètre interne voisin de celui du rayon laser.

L'appareil selon l'invention présente de nombreux avantages. On peut citer :

la rapidité de la mesure (de l'ordre de vingt à trente minutes au lieu de plusieurs heures par les méthodes usuelles) ;

l'utilisation de très faibles quantités de liquide (microméthode), ce qui est de plus en plus recherché et même exigé en milieu médical ;

la possibilité d'observer le phénomène avant même son apparition à l'œil nu et pendant même son déroulement ;

la possibilité d'analyser la courbe et d'avoir un dosage des antigènes ou des anticorps détectés ;

la possibilité de détecter des antigènes même chez des malades sous antibiotiques ;

la possibilité d'automatiser la mesure ;

la possibilité de travailler avec n'importe quelle source de rayon laser ;

la possibilité de réaliser des mesures reproductibles ;

la possibilité de jeter les tubes capillaires.

De la sorte, cet appareil peut être utilisé avec succès pour toute recherche d'antigènes ou d'anticorps dans des liquides clairs ou clarifiés. A titre d'exemple, on peut citer :

des dosages d'antibiotiques ;

la mise en évidence d'antigènes ou d'anticorps ;

la recherche des antigènes circulants.

On peut utiliser cet appareil essentiellement en milieu médical, mais également pour la détection des fraudes alimentaires.

**Revendications**

1. Néphélomètre à laser, pour la détection des antigènes et des anticorps, du type comprenant :

une source lumineuse laser (1) émettant un faisceau étroit (2) ;

une cellule de mesure (3) où se trouvent des solutions d'antigènes et d'anticorps à tester ;

un détecteur photo-électrique (8) recueillant la lumière diffusée (6) par l'échantillon ;

des organes de traitement (9-12) des signaux fournis par le détecteur (8) ;

caractérisé :

en ce que ladite cellule de mesure est formée par un tube capillaire (3),

en ce que le diamètre interne du tube capillaire (3) est voisin du diamètre du faisceau laser (2) ;

et en ce que le faisceau laser (2) est perpendiculaire au tube capillaire (3) et débouche dans ce tube capillaire (3) au voisinage de l'interface de séparation de la solution d'antigènes avec la solution d'anticorps.

2. Néphélomètre selon la revendication 1, caractérisé en ce que le tube capillaire (3) est un tube cylindrique droit à section régulière dont le diamètre interne est voisin de un millimètre.

## Claims

1. A laser nephelometer for detecting antigens and antibodies comprising :

a luminous laser source (1) emitting a narrow beam (2) ;

a measuring cell (3) containing solutions of antigens and antibodies to be detected ;

a photoelectric sensor (8) which gathers light scattered (6) by the sample ;

processing apparatus (9-12) of signals transmitted by the sensor (8) ;

wherein

the said measuring cell comprises a capillary tube (3) ;

the inner diameter of the said capillary tube (3) is close to the diameter of the laser beam (2) ;

the laser beam (2) is directed perpendicular to the capillary tube (3) and falls in the vicinity of the interface separation zone between the antigen solution and the antibodies solution.

2. A nephelometer as recited in claim 1, wherein the capillary tube (3) is a cylindrical straight tube with a regular section and an inner diameter close to one millimeter.

## Patentansprüche

1. Laser-Nephalometer zur Detektion von Antigenen und Antikörpern mit

einer Lichtquelle in Form eines ein enges Strahlenbündel (2) emittierenden Lasers (1),

einer Meßzelle (3) zur Aufnahme von zu untersuchenden, Antigene und Antikörper enthaltenden Lösungen,

einem photo-elektrischen Detektor (8) zum Auffangen des von einer Probe gestreuten Lichts (6) und

Einrichtungen (9 bis 12) zum Verarbeiten der vom Detektor (8) gelieferten Signale,

dadurch gekennzeichnet,

daß die Meßzelle von einer Kapillarröhre (3) gebildet wird,

daß der Innendurchmesser der Kapillarröhre (3) dem Durchmesser des Laser-Strahlenbündels (2) nahezu gleich ist und

daß das Laser-Strahlenbündel zur Kapillarröhre (3) senkrecht steht und in die Kapillarröhre (3) nahe der Grenzschicht zwischen der Antigen-Lösung und der Antikörper-Lösung eindringt.

2. Nephalometer nach Anspruch 1, dadurch gekennzeichnet, daß die Kapillarröhre (3) eine geradlinige zylindrische Röhre mit regelmäßigem Querschnitt ist, deren Innendurchmesser etwa 1 mm beträgt.

FIG 1

0 099 309

FIG 2